# EUROPEAN PATENT SPECIFICATION

(11) **EP 2 729 540 B1**
(45) Date of publication and mention of the grant of the patent: **17.06.2015**
(21) Application number: 12735210.2
(22) Date of filing: 06.07.2012
(51) Int. Cl.: C09D 5/08, C09D 179/08, C08G 73/14

(54) **POLYAMIDE-IMIDE COATED STEEL SUBSTRATE**
MIT POLYAMID/-IMID BESCHICHTETES STAHLSUBSTRAT
SUBSTRAT D'ACIER REVÊTU DE POLYAMIDE-IMIDE

(30) Priority: 07.07.2011 EP 11005546
(43) Date of publication of application: 14.05.2014
(73) Proprietor: Tata Steel Nederland Technology B.V., NL-1951 JZ VELSEN-NOORD (NL)
(72) Inventor: FLORES RAMIREZ, Jose Reyes, NL-1970 CA Ijmuiden (NL); WAINER, Magali Audrey Valeria, Nl-1970 CA Ijmuiden (NL); HANNOUR, Fouzia, NL-1970 CA Ijmuiden (NL)
(74) Representative: Blauw, Frans Gerard
(86) International application number: PCT/EP2012/002851
(87) International publication number: WO 2013/004394

(56) References cited:
- EP-A1- 0 758 674
- WO-A1-00/53677
- WO-A1-00/69984
- GB-A- 1 512 495
- US-A- 4 695 516
- US-A- 5 160 791
- US-A1- 2008 127 819

## Description

### FILED OF THE INVENTION

The present invention relates to a steel substrate comprising a corrosion protective coating and to a method for making the same. The present invention further relates to the use of the steel substrate in forming operations to form a part.

### BACKGROUND OF THE INVENTION

Galvanized steel is used in applications where rust resistance is needed, for instance, in the automotive industry where the zinc layer reduces the onset of rust at exposed edges and surfaces.

Additional coating layers are provided to make the galvanised steel substrate more aesthetically pleasing and to further protect the steel substrate from corrosion. In this respect galvanised steel substrates are first provided with a phosphate coating (2-5 µm) to enhance paint adhesion, by enhancing paint adhesion such phosphate coatings indirectly enhance corrosion resistance.

The application of the phosphate coating comprises the steps of dissolving metal phosphate salts in a solution of phosphoric acid and immersing the steel substrate in the solution for 4-6 minutes. However, before the phosphate coating can be applied, the automotive manufacturer needs to clean the galvanised steel substrate, such that it is free from oil, grease, lubricants and rust. This is not trivial and increases manufacturing costs. The use of phosphoric acid also introduces environmental and safety issues related to the handling and disposal of such solutions.

Organic coatings are often provided on the phosphate coating by electrophoretic deposition, which is a process that uses electrical current to deposit paint onto a suitable substrate. The electro-(organic)-coating typically has a thickness between 7 and 20 µm and acts as a primer for the application of additional paint layers. The use of electrophoretic deposition to apply organic coatings increases the cost of manufacturing automotive parts due to the high voltages that are required to apply such coatings.

US5160791 A describes a non-stick coating system comprising a primer, a top coat and up to one or more intermediate coats between the primer and the topcoat. The topcoat is applied to the substrate after application of the primer and any intermediate coats, and contains two fluorocarbon resins, one with a melt viscosity above 10¹⁰ poises, and the other with a melt viscosity in the range of 10³ to 10⁸ poises.

WO 00/69984 A1 discloses a coating system comprising a substrate with a multilayer non-stick coating of a primer, and a top coat with one or more intermediate layers and optionally a base coat applied directly to the substrate beneath the primer. According to WO 00/69984 A1 the top coat and one or more of the intermediate layers contain fluoropolymer resins, one or more adhesion promoters and ceramic particles.

It is an object of the present invention to provide a coated steel substrate having improved corrosion resistance, adhesion properties and lubrication properties.

It is a further object of the invention to provide a coated steel substrate having a reduced coating thickness.

It is another object of the invention to provide a process for manufacturing a coated steel substrate in which the steps of cleaning the substrate, providing a phosphate coating and an electro-coating are avoided.

### DESCRIPTION OF THE INVENTION

The first aspect of the invention relates to a steel substrate suitable for forming operations comprising a corrosion protective coating wherein the corrosion protective coating comprises a layer of polyamide-imide having a dry film thickness between 1 and 10 µm, wherein the layer of polyamide-imide further comprises a hydroxyl amine.

The inventors found that the layer of polyamide-imide (PAI) having a thickness between 1 and 10 µm exhibits improved corrosion resistance, humidity barrier properties, friction and adhesion properties relative to coating systems based on a phosphate layer and an electrophoretic layer, which have a layer thickness of approximately 2 µm and 20 µm respectively. The present invention therefore offers automotive manufacturers a significant advantage both in terms of cost and processing and materials handling since a single layer of polyamide-imide can be applied in a single pass to replace both the phosphate layer and the electrophoretic layer. The inventors have found that the thickness of the layer of polyamide-imide should be at most 10 µm since with higher thicknesses the layer may delaminate from the steel substrate. Another advantage of the present invention is that anti-corrosion pigments need not be provided to obtain the improvements in corrosion resistance. Surprisingly, it was found that the use of hydroxyl amines also improved coating performance which may be due to the water solubility and/or hydrogen bonding properties of hydroxyl amines.

In a preferred embodiment of the invention the PAI layer has a thermal stability between -60 °C and 400 °C meaning that it will not crack or thermally degrade at reduced or elevated temperatures which may be required for certain forming operations.

In a preferred embodiment of the invention the thermal degradation temperature of the layer of PAI is at least 250°C, preferably at least 400°C.

In a preferred embodiment of the invention the layer of polyamide-imide has a dry film thickness between 3 and 5 µm. PAI layers having a thickness between 3 and 5 µm exhibit excellent performance in respect of barrier, adhesion and corrosion resistance properties that can be provided at reduced cost relative to other thicker coatings. Preferably the layer of polyamide-imide has a dry film thickness between 2 and 5 µm since further cost savings can be made by providing 2 µm thick PAI layers.

In a preferred embodiment of the invention the layer of polyamide-imide has a coefficient of friction between 0.13 and 0.2.5, preferably between 0.13 and 0.2 at a temperature between - 10 and 120 °C. Automotive manufactures specify that coefficient of friction CoF values should be between 0.13 and 2.5. The coated steel strips according to the invention comply with such standards even when no lubricant is applied.

In the automotive industry lubricant is typically required when forming galvanised steel strips, and in certain instances, it may also be necessary to provide the galvanised steel strips with texture to improve lubricant retention at the steel strip surface. However, providing texture can be detrimental to both the formability of the galvanised steel strip and the appearance of such formed and painted steel parts. Another consequence of providing texture is that the friction coefficient will increase relative to galvanised steel strips without texture. Advantageously the layer of polyamide-imide is lubricating, which means an additional step of providing a lubricant and/or texture during subsequent forming and/or stamping operations is not required.

In a preferred embodiment of the invention the difference in friction coefficient between the first tool pass and the last tool pass of the linear friction test is less than 0.2, preferably less than 0.1 and more preferably less than 0.05. A stable CoF, preferably between 0.13 and 0.25, is of importance to automotive manufacturers. A tool pass may be defined as the number of times a coated strip is drawn between a flat tool and a cylindrical tool of the linear friction test apparatus.

In a preferred embodiment of the invention a zinc or a zinc alloy corrosion protective coating is present on the steel substrate, preferably the zinc alloy comprises Zn as the main constituent, i.e. the alloy comprises more than 50% zinc, and one or more of Mg, Al, Si, Mn, Cu, Fe and Cr. Zinc alloys selected from the group consisting of Zn-Mg, Zn-Mn, Zn-Fe, Zn-Al, Zn-Cu, Zn-Cr, Zn-Mg-Al and Zn-Mg-Al-Si are preferred and afford additional corrosion protection to the underlying steel substrate. Such coatings may be applied by hot-dip galvanising, electro-galvanising, galvannealing or by physical vapour deposition (PVD).

In a preferred embodiment of the invention the steel substrate is selected from the group consisting of carbon steel, low carbon steel, high strength steel, advanced high strength steel, boron steel, nickel chromium steel, electrical steel, tin-plated steel, nickel-plated steel and electro-coated chromium steel. Irrespective of whether the layer of polyamide-imide is provided on a coated steel substrate or an uncoated steel substrate, the layer of polyamide-imide exhibits improved adhesion to the underlying substrate relative to other commercially based corrosion protection systems as evidenced by the obtained CoF values.

Preferably the steel substrate is a strip sheet or blank that is suitable for subsequent forming operations.

The second aspect of the invention relates to a method of manufacturing a steel substrate comprising a corrosion protective coating according to the first aspect of the invention which comprises the steps of:
a. providing a steel substrate;
b. providing a curable coating on the steel substrate, which curable coating comprises water, polyamide-amic acid and an amine;
c. curing the curable coating to form the corrosion protective coating comprising a layer of polyamide-imide having a dry film thickness between 1 and 10µm.

In a preferred embodiment of the invention the curable coating comprises up to 20 wt% polyamide-amic acid, up to 7 wt% amine and the remainder being water. PAI layers having excellent humidity barrier, corrosion resistance and lubrication properties can be obtained by providing a curable coating comprising 5 to 20 wt%, preferably 5 to 10 % polyamide-amic acid and 1 to 7 wt%, preferably 1 to 4 wt% amine. The role of the amine is to aid the dissolution of the polyamide-amic acid in water by neutralising the amic acid groups and forming the corresponding water soluble salt. Amines used in accordance with the invention include ammonia, hydroxyl amines such as 2,2-Butyliminodiethanol and tertiary amines such as trimethylamine, N,N-dimethyl ethylamine,N,N-dimethyl propylamine, triethylamine or the like. Surprisingly, it was found that the use of hydroxyl amines also improved coating performance which may be due to the water solubility and/or hydrogen bonding properties of hydroxyl amines. Other suitable hydroxyl amines include diethylaminoethanol, diisopropanolamine and aminoethylpropanediol. Tertiary hydroxyl amines are preferred although the presence of primary or secondary hydroxyl amines in the curable coating also improves the corrosion resistance properties of the layer of polyamide-imide. The inventors found that hydroxyl amines having a boiling point of at least 160°C, preferably above 240°C further improved the corrosion protective properties of the layer of polyamideimide. Tertiary hydroxyl amines such as 2,2-Butyliminodiethanol are particularly preferred.

The rate of curing of the polyamide-amic acid can be enhanced by using tertiary amines. An amine concentration between 1 and 7 wt % is particularly suitable for the purposes of aiding dissolution and increasing the rate of curing. Preferred tertiary amines include trimethylamine, N,N-dimethylethylamine, N,N-dimethylpropylamine, triethylamine or the like.

In a preferred embodiment of the invention the curable coating is cured using near infrared radiation which causes the steel substrate to heat up and transfer heat to the curable coating. This has the advantage that the curable coating can be cured in seconds rather than minutes.

In a preferred embodiment of the invention the curable coating is cured between 160 and 300°C, preferably between 180 and 265°C. Using this preferred temperature range provides for a more economic curing process to form a cross-linked network of polyamide-imide.

According to a third aspect of the invention the steel substrate according to the first aspect of the invention is used in forming operations to form a part, which include but are not limited to, stamping, blanking and drawing.

In a preferred embodiment of the invention the forming is carried out without lubricant. Advantageously the use of the coated steel strip reduces manufacturing costs since additional lubrication is not required during, for instance, deep-drawing or stamping operations. The coated steel strip can also be manufactured in-house at the steel strip supplier. This has a significant advantage for the automotive manufacturer since the number of manufacturing steps required to form the part is reduced. At present the automotive manufacturer has to apply lubricant on the bare steel strip it has received, form it, clean it, provide a phosphate layer on the steel strip and provide an electro-coating on the phosphate layer before subsequent paint layers can be applied. The present invention avoids the automotive manufacturer having to apply lubricant before forming, removing lubricant after forming and having to provide the phosphate layer and electro-coating.

### EXAMPLES

The invention will now be elucidated by referring to the non-limitative examples below:

### Example 1: Preparation of aqueous polyamide-amic acid solution

200 g of polyamide amic acid (TORLON ® Al-50 from Solvay Advanced Polymers, available as wet powder with a solids content of 35 wt %, is dispersed in a mixture of water (485 g) and dimethyl ethanol amine (50 g). The dispersion is then warmed to a temperature between 60 and 70 °C until the solids dissolve to produce a brown aqueous solution having about 9 % by weight polyamide-amic acid.

### Example 2: Application of the aqueous polyamide-amic acid solution

The aqueous polyamide-amic acid solution is cooled to room temperature and 0.5 wt% of wetting agent BYK® 380N (from Byk Chemie) is added thereto. This solution is applied on a galvanised steel strip by roller coating at a speed of 150-250m/min. The applied coating is then cured via near-infrared at s temperature of 260°C for 5-10s to remove the aqueous solvent and form a layer of polyamide-imide on the galvanised steel strip surface.

### Experiments

In the experiments hereunder the layer of polyamide-imide has been applied on a galvanised steel strip (E1).The present invention (E1) has been compared to a number of commercial coating systems that are used in the automotive industry to reduce the effects of corrosion caused by surface defects, scratches and cut edges. C1-C3 are comparative examples in which galvanised steel strips have been provided with titanium phosphate (C1), a layer of acrylic containing chromate pigments (Cr 3⁺) thereon (C2) and polyester paint (C3).

Other polyamide amic acid solutions were prepared according to the method of Example 1 by replacing dimethyl ethanol amine with 2,2-Butyliminodiethanol (E2), diisopropanolamine (E3) or aminoethylpropanediol (E4). Dimethyl ethanol amine was also replaced by trimethylamine as a further comparative example (C4). These solutions were then applied and cured in accordance with the method of Example 2.

### Experiment 1: Salt spray test

In order to evaluate the performance of the layer polyamide-imide in respect of its corrosion resistance the coated steel strip of the invention was subjected to a salt spray test. The salt spray test was performed according to ASTM B117, using a 5% NaCl solution at 35 °C, with an overpressure of 2 - 3.5 mbar (200 to 350 Pascal) to create fog inside the spray chamber.

Table 1 shows the corrosion resistance properties of a galvanised steel strip provided with a layer of polyamide-imide (E1-E4) and comparative examples C1-C4. All thicknesses relate to the thickness of the respective layers, i.e. exclusive of the underlying galvanised coating layer. It can be seen from Table 1 that the present invention E1 offers a significant improvement in corrosion resistance relative to C1-C3 with just 2 % white rust being observed after 15 days and 5 % white rust being observed after 25 days. Similar results are obtained for examples E2-E4. The observed improvement in corrosion resistance properties for E2 relative to E1 has been attributed to the presence of 2,2-Butyliminodiethanol having a boiling point of 274°C, which is above the temperature required to cure the applied coating.

**Table 1**

| | | White rust percentage (Wr %) | | | | |
|---|---|---|---|---|---|---|
| | Thickness (µm) | 5 days | 10 days | 15 days | 20 days | 25 days |
| E1 | 6 | 0 | 0 | 2 | 3 | 5 |
| E2 | 6 | 0 | 0 | 0 | 1 | 3 |
| E3 | 6 | 0 | 0 | 1 | 3 | 6 |
| E4 | 7 | 0 | 0 | 4 | 7 | 10 |
| C1 | 4 | 5 | 15 | 26 | 60 | 87 |
| C2 | 4 | 10 | 18 | 40 | 75 | 96 |
| C3 | 14 | 0 | 5 | 18 | 26 | 40 |
| C4 | 8 | 7 | 15 | 29 | 32 | 45 |

### Experiment 2: Cyclic humidity test

In order to evaluate the performance of the layer of polyamide-imide in respect of its humidity barrier properties the coated steel strip of the invention was subjected to a cyclic humidity test (DIN-norm 50017, ISO6270-2) The following conditions were used: 38°C with a humidity cycle of 100 % for 8 hours and atmospheric humidity for 16 hours.

Table 2 shows the humidity barrier properties of the present invention (E1) and comparative examples C1-C3. The results show that the layer of polyamide-imide is particularly effective as a humidity barrier since no white rust is observed after 9 weeks and only 2% white is observed after 15 weeks of the cyclic humidity test. For comparative examples C1-C3 white rust can be seen after 3 weeks and between 6 and 15 weeks the amount of white rust significantly increases, particularly with respect to C1 and C2.

**Table 2**

| | White rust percentage (Wr %) | | | | | |
|---|---|---|---|---|---|---|
| | Thickness (µm) | 3 wks | 6 wks | 9 wks | 12 wks | 15 wks |
| E1 | 6 | 0 | 0 | 0 | 1 | 2 |
| C1 | 4 | 1 | 4 | 18 | 60 | 87 |
| C2 | 4 | 40 | 80 | 90 | 100 | 100 |
| C3 | 14 | 5 | 13 | 20 | 27 | 49 |

### Experiment 3: Linear friction test

In order to probe the susceptibility of the layer of polyamide-imide to galling the coated steel strip of the invention and the comparative examples were subjected to a linear friction test (LFT). Coated steel strips having a width of 50 mm and a length of 300 mm were oiled where appropriate (strip E only) with Quaker N6130 oil. The oil had a layer thickness of 1.0 ± 0.2 g/m² which corresponds to what is usual in a press line. The coated strips of the present invention (strips A-B and comparative coated strips C-D) were tested dry (no oil) to assess their self-lubricating properties. The coated steel strips were then pulled at a speed of 0.33 mm/s between a flat tool and a cylindrical tool pushed together with a force of 5 kN. The tool material used was DIN 1.3343 and the surface roughness (Ra) of each tool was 0.4µm. Before each test the tools were cleaned with a tissue soaked in acetone or alcohol. The coated strips were drawn through the tools ten times along a testing distance of 55 mm; after each stroke the tools were released and the strips returned to the original starting position in preparation for the next stroke. All tests were conducted in triplicate at 20°C and 80°C at atmospheric pressure.

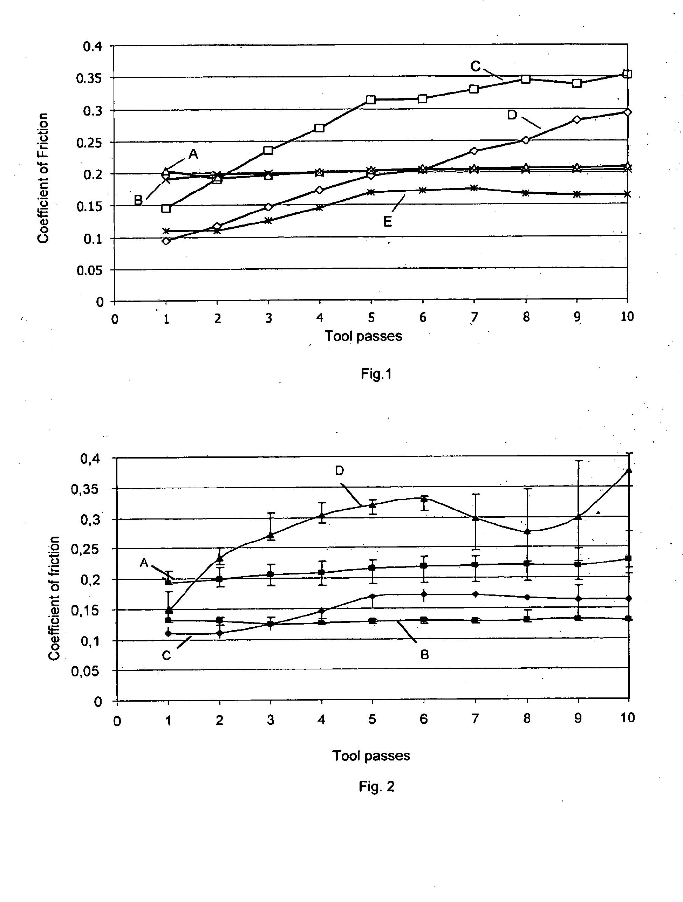

Fig. 1 shows the coefficient of friction as a function of the number of tooling steps at 20°C. Strip A is a galvanised steel strip that has been provided with a layer of polyamide-imide having a thickness of 6 µm. Strip B is a cold-rolled steel strip that has been provided with a layer of polyamide-imide having a thickness of 7 µm. Strips C-D correspond with comparative examples C1-C2 respectively and strip E is a galvanised strip that has been provided with oil as a lubricant.

From Fig. 1 it can be seen that the difference in coefficient of friction between the first tool pass and the tenth tool pass is less than 0.02, i.e. it is substantially constant for both Strip A and Strip B of the invention. Moreover, the layer of polyamide-imide is smooth enough to have a friction coefficient that satisfies the CoF requirements of the automotive industry (0.13 - 2.5). The results also show that the layer of polyamide-imide has very good adhesion to the underlying substrate irrespective of whether it is provided on galvanised steel or cold-rolled steel. If this was not the case then the friction coefficient would increase with the number of tool passes. During the LFT no tool damage or tool fouling was observed. The layer of polyamide-imide is also hard enough to resist contact with a metallic tool (at least 10 times). It is this combination of surface characteristics (hard, smooth and adhesive) that allows the coated steel strips of the present invention to be formed without the need of additional lubrication (oil, wax, hard particles).

Fig. 2 shows the coefficient of friction as a function of the number of tooling steps at 20°C. and 80°C. Strip A and B are galvanised steel strips that have been provided with a layer of polyamide-imide having a thickness of 6 µm which were tested for friction respectively at 20°C and at 80°C. Strips C-D are galvanised strips that have been provided with oil as a lubricant and were tested respectively at 20°C and at 80°C.

From Fig. 2 it can be seen that the difference in friction coefficient between the first tool pass and the tenth tool pass is less than 0.05 for both strip A and strip B of the invention, i.e. at 20°C and 80°C. Thus, even if the strips are heated up due to contact with warm tooling or due to friction during forming, the CoF of the strips with the polyamide-imide layer still satisfy the requirements of the automotive manufacturers. In contrast, galvanized steel strips with lubricant, exhibit a CoF increase of up to 350% from pass 1 to pass 10 at 80°C. Fig. 2 also shows that the adhesion of the polyamide-imide coating to the galvanised steel strip does not degrade with an increase in temperature.

### Experiment 4; Adhesion test

Coating adhesion was assessed in accordance with ASTM D 3359 - 08, which comprises the steps of applying and removing pressure-sensitive tape over cuts made in the coating. This standard test was carried out on a galvanised steel strip provided with a layer of polyamide-imide (E1) and a galvanised steel strip provided with a phosphate layer and an electro-(organic)-coating on the phosphate layer (C5). Adhesion properties were assessed by measuring the amount of coating that delaminates from the coated surface after removal of the pressure-sensitive tape. The test results showed that 0% (5B rating) of the polyamide-imide layer (E1) delaminated from the galvanised steel strip surface, whereas 35% (2B rating) delamination was observed for the phosphate/E-coat system (C5).

## Claims

1. Steel substrate suitable for forming operations comprising a corrosion protective coating, wherein the corrosion protective coating comprises a layer of polyamide-imide having a dry film thickness between 1 and 10 µm, and wherein the layer of polyamide-imide further comprises a hydroxyl amine.

2. Steel substrate according to claim 1, wherein the hydroxyl amine comprises diethylaminoethanol, diisopropanolamine or aminoethylpropanediol.

3. Steel substrate according to claim 1 or claim 2, wherein the hydroxyl amine has a boiling point of at least 160°C, preferably above 240°C.

4. Steel substrate according to any one of the preceding claims, wherein the layer of polyamide-imide has a dry film thickness between 2 and 5 µm.

5. Steel substrate according to any one of the preceding claims, wherein the layer of polyamide-imide has a coefficient of friction between 0.13 and 0.25, preferably between 0.13 and 0.2 at a temperature between -10 and 120 °C.

6. Steel substrate according to any one of the preceding claims, wherein the thermal degradation temperature of the layer of polyamide-imide is at least 250 °C, preferably at least 400°C.

7. Steel substrate according to any one of the preceding claims, wherein the steel substrate comprises a strip, sheet or blank.

8. Steel substrate according to any one of the preceding claims, wherein the steel comprises a cold-rolled steel.

9. Steel substrate according to any one of the preceding claims, wherein a zinc or a zinc alloy corrosion protective coating is present on the steel substrate, preferably the zinc alloy comprises more than 50% zinc and one or more of Mg, Al, Si, Mn, Cu, Fe and Cr.

10. Steel substrate according to any one of the preceding claims, wherein the steel is selected from the group consisting of carbon steel, boron steel, nickel chromium steel, tin-plated steel, nickel-plated steel and electro-coated chromium steel.

11. Method of manufacturing a steel substrate according to any one of claims 1-10, which comprises the steps of:
a. providing a steel substrate;
b. providing a curable coating on the steel substrate, which curable coating comprises water, polyamide-amic acid and a hydroxyl amine;
c. curing the curable coating to form the corrosion protective coating comprising a layer of polyamide-imide having a dry film thickness between 1 and 10µm.

12. Method of manufacturing a steel substrate according to claim 11, wherein the curable coating comprises up to 20 % polyamide-amic acid, up to 7 % hydroxyl amine and water.

13. Method of manufacturing a steel substrate according to claim 11 or claim 12, wherein the curable coating comprises 5 to 20 % polyamide-amic acid, 1 to 7 % hydroxyl amine and water.

14. Method of manufacturing a steel substrate according to any one of claims 11-13, wherein the curable coating is cured using near infrared radiation which causes the steel substrate to heat up and transfer heat to the curable coating.

15. Method of manufacturing a steel substrate according to any one of claims 11-14, wherein the curable coating is cured between 160 and 300°C, preferably between 180 and 265°C.

16. Use of the steel substrate according to any one of claims 1-10 in forming operations to form a part.

17. Use of the steel substrate according claim 16 in forming operations to form a part wherein the forming is carried out without lubricant.

## Patentansprüche

1. Trägermaterial aus Stahl, das für Umformverfahren geeignet ist, umfassend eine Korrosionsschutzschicht, wobei die Korrosionsschutzschicht eine Schicht aus Polyamidimid mit einer Trockenschichtdicke von 1 bis 10 µm umfasst und wobei die Schicht aus Polyamidimid weiter ein Hydroxylamin umfasst.

2. Trägermaterial aus Stahl nach Anspruch 1, wobei das Hydroxylamin Diethylaminoethanol, Diisopropanolamin oder Aminoethylpropandiol umfasst.

3. Trägermaterial aus Stahl nach Anspruch 1 oder 2, wobei der Siedepunkt des Hydroxylamins bei mindestens 160° C, bevorzugt bei über 240° C liegt.

4. Trägermaterial aus Stahl nach jedem beliebigen der vorhergehenden Ansprüche, wobei die Schicht aus Polyamidimid eine Trockenschichtdicke zwischen 2 und 5 µm aufweist.

5. Trägermaterial aus Stahl nach jedem beliebigen der vorhergehenden Ansprüche, wobei die Schicht aus Polyamidimid einen Reibungskoeffizienten von 0,13 bis 0,25 hat, bevorzugt von 0,13 bis 0,2 bei einer Temperatur von -10 bis 120° C.

6. Trägermaterial aus Stahl nach jedem beliebigen der vorhergehenden Ansprüche, wobei die Temperatur des thermischen Abbaus der Schicht aus Polyamidimid mindestens 250° C, bevorzugt mindestens 400° C beträgt.

7. Trägermaterial aus Stahl nach jedem beliebigen der vorhergehenden Ansprüche, wobei das Trägermaterial aus Stahl einen Streifen, einen Bogen oder eine Bahn umfasst.

8. Trägermaterial aus Stahl nach jedem beliebigen der vorhergehenden Ansprüche, wobei der Stahl kaltgewalzten Stahl umfasst.

9. Trägermaterial aus Stahl nach jedem beliebigen der vorhergehenden Ansprüche, wobei auf dem Trägermaterial aus Stahl eine Korrosionsschutzschicht aus Zink oder einer Zinklegierung vorhanden ist; bevorzugt umfasst die Zinklegierung mehr als 50 % Zink und eines oder mehrere der folgenden Elemente: Mg, Al, Si, Mn, Cu, Fe und Cr.

10. Trägermaterial aus Stahl nach jedem beliebigen der vorhergehenden Ansprüche, wobei der Stahl aus der aus Kohlenstoffstahl, Borstahl, Chromnickelstahl, verzinntem Stahl, vernickeltem Stahl und elektrobeschichtetem Chromstahl bestehenden Gruppe gewählt wird.

11. Verfahren zur Herstellung eines Trägermaterials aus Stahl nach jedem beliebigen der Ansprüche 1-10, das die folgenden Schritte umfasst:
a. Bereitstellen eines Trägermaterials aus Stahl;
b. Bereitstellen einer härtbaren Beschichtung auf dem Trägermaterial aus Stahl, wobei die härtbare Beschichtung Wasser, Polyamid-Amidsäure und ein Hydroxylamin umfasst;
c. Härten der härtbaren Beschichtung zur Bildung der Korrosionsschutzschicht, umfassend eine Schicht aus Polyamidimid mit einer Trockenschichtdicke von 1 bis 10 µm.

12. Verfahren zur Herstellung eines Trägermaterials aus Stahl nach Anspruch 11, wobei die härtbare Beschichtung bis zu 20 % Polyamid-Amidsäure, bis zu 7 % Hydroxylamin und Wasser enthält.

13. Verfahren zur Herstellung eines Trägermaterials aus Stahl nach Anspruch 11 oder Anspruch 12, wobei die härtbare Beschichtung 5 bis 20 % Polyamid-Amidsäure, 1 bis 7 % Hydroxylamin und Wasser enthält.

14. Verfahren zur Herstellung eines Trägermaterials aus Stahl nach jedem beliebigen der Ansprüche 11-13, wobei die härtbare Beschichtung unter Einsatz von naher Infrarotstrahlung gehärtet wird, wodurch sich das Trägermaterial aus Stahl aufheizt und Wärme auf die härtbare Beschichtung überträgt.

15. Verfahren zur Herstellung eines Trägermaterials aus Stahl nach jedem beliebigen der Ansprüche 11-14, wobei die härtbare Beschichtung bei 160 bis 300° C, bevorzugt bei 180 bis 265° C gehärtet wird.

16. Verwendung des Trägermaterials aus Stahl nach jedem beliebigen der Ansprüche 1-10 in Umformverfahren zum Umformen eines Teils.

17. Verwendung des Trägermaterials aus Stahl nach Anspruch 16 in Umformverfahren zum Umformen eines Teils, wobei das Umformen ohne Schmiermittel erfolgt.

## Revendications

1. Substrat en acier adapté aux opérations de formage comprenant un revêtement de protection contre la corrosion, ledit revêtement de protection contre la corrosion comportant une couche de polyamide-imide d'une épaisseur de film sec comprise entre 1 et 10 µm et ladite couche de polyamide-imide comportant en outre une hydroxylamine.

2. Substrat en acier selon la revendication 1, ladite hydroxylamine comprenant un diéthylaminoéthanol, une diisopropanolamine ou un aminoéthylpropanediol.

3. Substrat en acier selon la revendication 1 ou 2, ladite hydroxylamine ayant un point d'ébullition d'au moins 160°C, de préférence supérieur à 240°C.

4. Substrat en acier selon l'une quelconque des revendications précédentes, ladite couche de polyamide-imide ayant une épaisseur de fil sec comprise entre 2 et 5 µm.

5. Substrat en acier selon l'une quelconque des revendications précédentes, ladite couche de polyamide-imide ayant un coefficient de frottement compris entre 0,13 et 0,25, de préférence entre 0,13 et 0,2 à une température comprise entre -10 et 120°C.

6. Substrat en acier selon l'une quelconque des revendications précédentes, ladite température de dégradation thermique de la couche de polyamide-imide étant d'au moins 250°C, de préférence d'au moins 400°C.

7. Substrat en acier selon l'une quelconque des revendications précédentes, ledit substrat en acier étant constitué d'une bande, d'une feuille ou d'une ébauche.

8. Substrat en acier selon l'une quelconque des revendications précédentes, ledit acier comportant un acier laminé à froid.

9. Substrat en acier selon l'une quelconque des revendications précédentes, un revêtement de protection contre la corrosion en zinc ou en alliage de zinc étant présent sur le substrat en acier, de préférence l'alliage de zinc comportant plus de 50 % de zinc et un ou plusieurs éléments parmi Mg, Al, Si, Mn, Cu, Fe et Cr.

10. Substrat en acier selon l'une quelconque des revendications précédentes, ledit acier étant choisi dans le groupe constitué par les aciers au carbone, les aciers au bore, les aciers au nickel-chrome, les aciers étamés, les aciers nickelés et les aciers au chrome ayant subi une électrodéposition.

11. Procédé de fabrication d'un substrat en acier selon l'une quelconque des revendications 1 à 10 qui comprend les étapes de :
a. fourniture d'un substrat en acier ;
b. dépôt d'un revêtement durcissable sur le substrat en acier, lequel revêtement durcissable comprenant de l'eau, le polyamide-acide amique et une hydroxylamine ;
c. durcissement du revêtement durcissable pour produire un revêtement de protection contre la corrosion comprenant une couche de polyamide-imide ayant une épaisseur de film sec comprise entre 1 et 10 µm.

12. Procédé de fabrication d'un substrat en acier selon la revendication 11, ledit revêtement durcissable comprenant jusqu'à 20 % de polyamide-acide amique, jusqu'à 7 % d'hydroxylamine et de l'eau.

13. Procédé de fabrication d'un substrat en acier selon la revendication 11 ou 12, ledit revêtement durcissable comprenant 5 à 20 % de polyamide-acide amique, 1 à 7 % d'hydroxylamine et de l'eau.

14. Procédé de fabrication d'un substrat en acier selon l'une quelconque des revendications 11 à 13, ledit revêtement durcissable étant durci au moyen d'un rayonnement dans le proche infrarouge qui provoque le réchauffement de l'acier et le transfert de la chaleur au revêtement durcissable.

15. Procédé de fabrication d'un substrat en acier selon l'une quelconque des revendications 11 à 14, ledit revêtement durcissable étant durci entre 160 et 300°C, de préférence entre 180 et 265°C.

16. Utilisation du substrat en acier selon l'une quelconque des revendications 1 à 10 dans des opérations de formage pour produire une pièce.

17. Utilisation du substrat en acier selon la revendication 16 dans des opérations de formage pour produire une pièce, ledit formage étant réalisé sans lubrifiant.
